# EUROPÄISCHE PATENTANMELDUNG

(11) **EP 1 088 714 A2**
(43) Veröffentlichungstag der Anmeldung: **04.04.2001**
(21) Anmeldenummer: 00120197.9
(22) Anmeldetag: 25.09.2000
(51) Int. Cl.: B60R 21/26, B60R 21/20

(54) **Integrierter Gasgenerator**

(30) Priorität: 28.09.1999 DE 29917077 U
(71) Anmelder: TRW Automotive Safety Systems GmbH & Co. KG, 63743 Aschaffenburg (DE)
(72) Erfinder: Derrick, John-Oliver, 97265 Hettstadt (DE); Frisch, Ralph, 63776 Mömbris (DE)
(74) Vertreter: Kitzhofer, Thomas, Dipl.-Ing.

(57) **Zusammenfassung**

Die Erfindung betrifft einen Gasgenerator (12), insbesondere für ein Fahrzeuginsassen-Rückhaltesystem, mit einem Außengehäuse, das eine Umfangswand aufweist, und mit wenigstens einer Brennkammer (30), die ein Brennkammergehäuse hat, wobei ein Abschnitt des Brennkammergehäuses einen Abschnitt des Außengehäuses bildet. Der Gasgenerator hat darüber hinaus eine Filterkammer (28), welche die Brennkammer (30) umgibt und ein mehrteiliges Filterkammergehäuse hat, das innenseitig durch einen Teil (34) des Brennkammergehäuses und außenseitig durch die Umfangswand des Außengehäuses gebildet wird. Der Gasgenerator ist dadurch gekennzeichnet, daß die Umfangswand entlang des Umfangs des Außengehäuses geteilt und durch separate, am Brennkammergehäuse befestigte Teile gebildet ist. Ein erstes Teil (20) der Umfangswand weist einen ersten Ringflansch (22) auf und ein zweites Teil (24) der Umfangswand weist einen parallelen zweiten Ringflansch (26) auf, wobei der zweite Ringflansch vom ersten Ringflansch allenfalls geringfügig axial beabstandet ist.

## Beschreibung

Die Erfindung betrifft einen Gasgenerator, insbesondere für ein Fahrzeuginsassen-Rückhaltesystem, mit einem Außengehäuse, das eine Umfangswand aufweist, mit wenigstens einer Brennkammer, die ein Brennkammergehäuse hat, wobei ein Abschnitt des Brennkammergehäuses einen Abschnitt des Außengehäuses bildet, und mit einer Filterkammer, welche die Brennkammer umgibt und ein mehrteiliges Filterkammergehäuse hat, das innenseitig durch einen Teil des Brennkammergehäuses und das außenseitig durch die Umfangswand des Außengehäuses gebildet wird.

Derartige Gasgeneratoren werden beispielsweise zum Einbau in Gassackmodule verwendet. Vor dem Einbau in das Gassackmodul müssen diese Generatoren komplett montiert sein und dann bis zu ihrer Weiterverwendung verpackt, gelagert und transportiert werden. Der Einbau am Bestimmungsort erfordet dann eine erneute Handhabung und weitere Arbeitsschritte, insbesondere das Anbringen eines im Inneren des Gassacks angeordneten Klemmblechs. Zwischen dem Klemmblech und dem Gasgenerator ist der Gassack geklemmt.

Die anfallenden Arbeitsschritte können zu einem wesentlichen Teil vermieden werden, wenn der Gasgenerator erst mit dem Einbau an seinem Bestimmungsort zusammengesetzt wird und sein Gehäuse so konstruiert ist, daß es durch den Einbau gleichzeitig geschlossen wird.

Die Erfindung schafft einen Gasgenerator, der dies ermöglicht und der zur Befestigung des Gassacks keinen separaten Klemmring erfordert.

Zu diesem Zweck ist bei einem gattungsgemäßen Gasgenerator die Umfangswand entlang des Umfangs des Außengehäuses geteilt und durch separate, am Brennkammergehäuse befestigte Teile gebildet, wobei ein erstes Teil der Umfangswand einen ersten Ringflansch aufweist und ein zweites Teil der Umfangswand einen parallelen zweiten Ringflansch aufweist und der zweite Ringflansch vom ersten Ringflansch allenfalls geringfügig axial beabstandet ist. Dadurch ist es möglich, bei der Befestigung des Gasgenerators an seinem Einbauort mittels der beiden Flansche gleichzeitig die beiden Teile der Umfangswand zu verbinden, das Außengehäuse zu schließen und den Gassack zwischen den Flanschen zu klemmen.

Eine Ausführungsform der Erfindung sieht vor, daß das Brennkammergehäuse zwischen dem ersten Teil und dem zweiten Teil der Umfangswand axial geklemmt ist. Damit erübrigen sich weitere Befestigungsmittel für das Brennkammergehäuse und die damit verbundenen Montagevorgänge.

Weiterhin sieht die Erfindung ein Gassack-Modul für ein Fahrzeuginsassen-Rückhaltesystem mit einem Gassack und mit einem Gasgenerator gemäß der Erfindung vor, wobei der Gassack zwischen dem ersten Ringflansch und dem zweiten Ringflansch geklemmt ist. Damit kann der Gassack ohne weitere Befestigungsmittel und ohne zusätzlichen Montageschritt im Modul befestigt werden.

Nach einer weiteren Ausführungsform der Erfindung hat das Gassack-Modul ein Modulgehäuse, und einer der beiden Ringflansche ist als Befestigungsflansch für den Gasgenerator am Modulgehäuse ausgebildet. Damit kann der Gasgenerator am Modulgehäuse montiert werden, ohne daß am Außengehäuse des Gasgenerators zusätzliche Befestigungsmittel anzubringen sind.

Eine bevorzugte Ausführungsform der Erfindung sieht vor, daß der Befestigungsflansch ein Teil des Modulgehäuses, z.B. ein topfförmiges Unterteil ist. Damit wird der Zusammenbau des Moduls und des Generators weiter vereinfacht und die Anzahl der benötigten Bauteile verringert.

Weitere Merkmale und Vorteile ergeben sich aus der Beschreibung einer beispielhaften Ausführungsform, die auf die beigefügten Zeichnungen Bezug nimmt, welche zeigen:
Fig. 1 eine Draufsicht eines erfindungsgemäßen Gassackmoduls mit einem integrierten Gasgenerator gemäß der Erfindung;
Fig. 2 einen Querschnitt durch das in Fig. 1 gezeigte Gassackmodul;
Fig. 3 einen vergrößerten Detailquerschnitt durch das Modul nach Fig. 1 entlang der Schnittlinie I-I; und
Fig. 4 einen vergrößerten Detailquerschnitt des Moduls nach Fig. 1 entlang der Schnittlinie II-II.

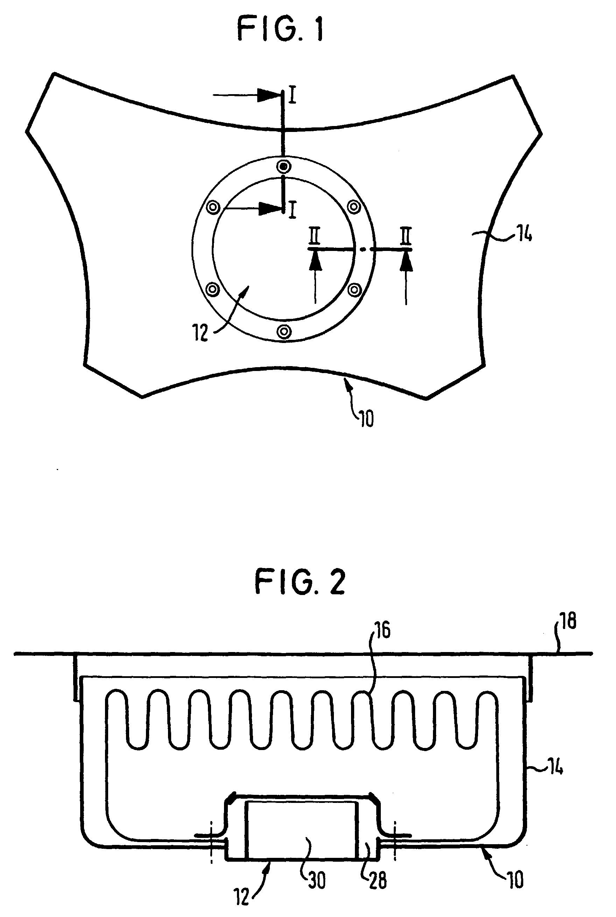

Das in den Figuren 1 und 2 gezeigte Fahrer-Gassackmodul 10 für ein Fahrzeuginsassen-Rückhaltesystem enthält einen Gasgenerator 12 gemäß der Erfindung, ein Modulgehäuse 14, das aus einem topfförmigen, einstückigen Unterteil besteht, sowie einen Gassack 16 und eine Abdeckung 18, die in Fig. 1 zur besseren Übersicht weggelassen sind.

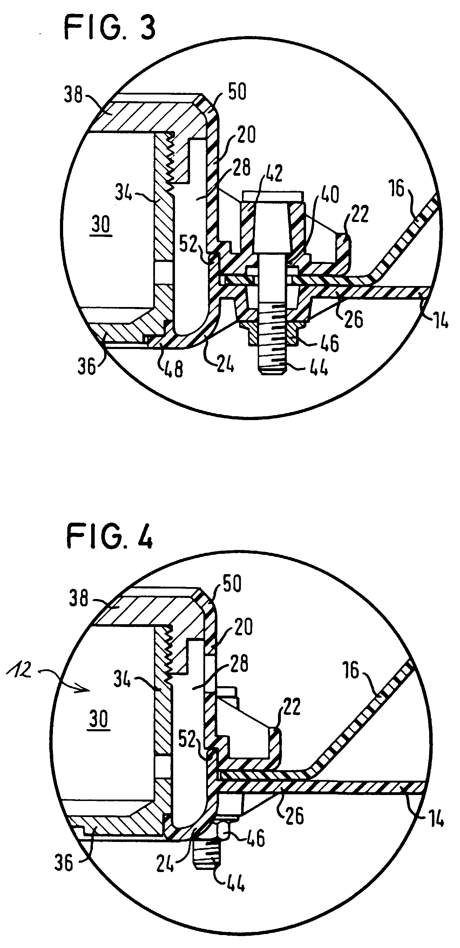

In den Figuren 3 und 4 sind jeweils in einem vergrößerten Schnitt Details der Verbindung zwischen Modul, Gasgenerator 12 und Gassack 16 zu sehen. Der Gasgenerator 12 hat ein mehrteiliges Außengehäuse, mit einer entlang des Umfangs geteilten Umfangswand. Die Umfangswand besteht zum einen aus einem Oberteil 20 (erstes Teil) mit einem ersten Ringflansch 22 und zum anderen aus einem Unterteil 24 (zweites Teil), das von einem Abschnitt des Modulgehäuses 14 gebildet wird, dessen an das Unterteil 24 angrenzender Abschnitt einen zweiten Ringflansch 26 für das Unterteil bildet. Die beiden Teile 20, 24 der Umfangswand bilden, bezüglich des Gasgenerators außenseitig, einen Abschnitt eines Filterkammergehäuses, das eine ringförmige Filterkammer 28 einschließt. Die Filterkammer 28 umgibt eine Brennkammer 30, die von einem Brennkammergehäuse umschlossen ist. Die Umfangswand 34 des Brennkammergehäuses trennt die Brennkammer 30 von der Filterkammer 28 und bildet somit innenseitig einen Teil des Filterkammergehäuses. Der Boden 36 und der Deckel 38 des Brennkammergehäuses bilden zwei weitere Teile des Außengehäuses des Gasgenerators 12. Weitere Bestandteile des Gasgenerators 12, wie Treibmittel und Zünder, können in bekannter Weise ausgeführt sein, sind aber in den Abbildungen, da für das Verständnis der Erfindung ohne Bedeutung, weggelassen worden.

Im ersten Ringflansch 22 der Umfangswand des Außengehäuses sind Bohrungen 40 vorgesehen, die von im Ringflansch 22 ausgebildeten Hülsen 42 umgeben sind. Durch diese Bohrungen 40 sind Gewindebolzen 44 geführt, die zum Beispiel am Kopf durch einen konischen Schaft der Hülsen 42 gehalten werden. Vorteilhafterweise werden diese Bolzen 44 bereits bei der Herstellung des Oberteils 20 eingesetzt oder eingeformt. Die Gewindeabschnitte der Bolzen 44 ragen durch Bohrungen im Ringflansch 26 des Unterteils 24 der Umfangswand hindurch. Durch zugehörige Muttern 46 sind Ober- und Unterteil 20, 24 der Umfangswand miteinander an ihren Ringflanschen verschraubt, wodurch einerseits der Gassack 16 zwischen den Ringflanschen geklemmt ist und andererseits zwischen einem am Unterteil 24 ausgebildeten Rand 48 und einem nach innen gebogenen Rand 50 am Oberteil 20 das Brennkammergehäuse 34, 36, 38 geklemmt ist.

Am zweiten Ringflansch 26 ist ein axial in eine umlaufende Nut im ersten Ringflansch 22 eingreifender Zentrierabschnitt 52 vorgesehen, der das erste und das zweite Teil 20, 24 zueinander zentriert.

Anhand dieser Ausführungsform zeigt sich deutlich, daß durch die Gestaltung des Gasgenerators nach der Erfindung der Zusammenbau wesentlich vereinfacht wird. Mit einem Arbeitsgang können gleichzeitig der Gasgenerator verschlossen sowie Luftsack und Gasgenerator am Modulgehäuse befestigt werden. Weiterhin können Bauteile eingespart werden, da keine separaten Befestigungsmittel für Gasgenerator oder Luftsack erforderlich sind. Neben einer erheblichen Gewichtseinsparung führt dies zu einer nicht unerheblichen Kostenreduzierung.

Sowohl Ober- als auch Unterteil der Umfangswand können aus diversen, auch unterschiedlichen Materialien, etwa Leichtmetalldruckguß, Blech oder Kunststoff, ausgeführt sein.

Die einzelnen Merkmale der Erfindung können unabhängig voneinander verwendet werden, eventuell unter Verlust eines Teils der genannten Vorteile. So ist es beispielsweise möglich, anstelle des Unterteils das Oberteil der Umfangswand als Abschnitt des Modulgehäuses auszubilden und den Luftsack separat zu befestigen. Weiterhin kann die Erfindung auch dort Verwendung finden, wo kein Modulgehäuse vorgesehen ist, indem die Ringflansche als Befestigungsflansche dienen oder eventuell auch nur einer der beiden entsprechend verlängert oder besonders ausgeformt ist, um eine Befestigungsmöglichkeit zu bieten.

## Patentansprüche

1. Gasgenerator (12), insbesondere für ein Fahrzeuginsassen-Rückhaltesystem, mit einem Außengehäuse das eine Umfangswand aufweist, mit wenigstens einer Brennkammer (30), die ein Brennkammergehäuse hat, wobei ein Abschnitt des Brennkammergehäuses einen Abschnitt des Außengehäuses bildet, und mit einer Filterkammer (28), welche die Brennkammer (30) umgibt und ein mehrteiliges Filterkammergehäuse hat, das innenseitig durch einen Teil (34) des Brennkammergehäuses und außenseitig durch die Umfangswand des Außengehäuses gebildet wird,
dadurch gekennzeichnet, daß die Umfangswand entlang des Umfangs des Außengehäuses geteilt und durch separate, am Brennkammergehäuse befestigte Teile gebildet ist, daß ein erstes Teil (20) der Umfangswand einen ersten Ringflansch (22) aufweist und daß ein zweites Teil (24) der Umfangswand einen parallelen zweiten Ringflansch (26) aufweist, wobei der zweite Ringflansch vom ersten Ringflansch allenfalls geringfügig axial beabstandet ist.

2. Gasgenerator nach Anspruch 1, dadurch gekennzeichnet, daß das Brennkammergehäuse zwischen dem ersten Teil (20) und dem zweiten Teil (24) der Umfangswand axial geklemmt ist.

3. Gasgenerator nach Anspruch 1 oder 2, dadurch gekennzeichnet, daß ein Zentrierabschnitt (52) am ersten (22) oder zweiten (26) Ringflansch das erste (20) und das zweite (24) Teil zueinander ausrichtet.

4. Gassack-Modul (10) für ein Fahrzeuginsassen-Rückhaltesystem mit einem Gassack (16) und mit einem Gasgenerator (12) nach einem der vorhergehenden Ansprüche,
dadurch gekennzeichnet, daß der Gassack (16) zwischen dem ersten Ringflansch (22) und dem zweiten Ringflansch (24) geklemmt ist.

5. Gassack-Modul (10) nach Anspruch 4, dadurch gekennzeichnet, daß das Modul ein Modulgehäuse (14) hat und daß einer der beiden Ringflansche (22, 26) als Befestigungsflansch (26) für den Gasgenerator (12) am Modulgehäuse ausgebildet ist.

6. Gassack-Modul nach Anspruch 5, dadurch gekennzeichnet, daß der Befestigungsflansch (26) ein Teil des Modulgehäuses ist.

7. Gassack-Modul (10) nach Anspruch 6, dadurch gekennzeichnet, daß der Befestigungsflansch (26) ein topfförmiges Unterteil des Modulgehäuses (14) bildet, in dem Gassack (16) und Gasgenerator (12) untergebracht sind.
